# EUROPÄISCHE PATENTSCHRIFT

(11) **EP 0 540 848 B1**
(45) Veröffentlichungstag und Bekanntmachung des Hinweises auf die Patenterteilung: **26.04.1995**
(21) Anmeldenummer: 92115029.8
(22) Anmeldetag: 03.09.1992
(51) Int. Cl.: F41A 23/24

(54) **Drehringlafette für eine leichte Waffe an einem Kampffahrzeug, insbesondere an einer Luke eines Kampfpanzers**
Rotating ring mount for a light gun on an armoured combat vehicle, especially on the hatch of a tank
Affût à bague rotatif pour arme légère sur un véhicule blindé de combat, en particulier sur la trappe d'un char

(30) Priorität: 07.11.1991 DE 4136602
(43) Veröffentlichungstag der Anmeldung: 12.05.1993
(73) Patentinhaber: Wegmann & Co. GmbH, D-34127 Kassel (DE)
(72) Erfinder: Sprafke, Uwe, Dipl.-Ing., W-3501 Schauenburg (DE)
(74) Vertreter: Feder, Wolf-Dietrich, Dr. Dipl.-Phys.

(56) Entgegenhaltungen:
- DE-A- 3 305 882
- FR-A- 2 506 002
- FR-A- 2 654 819
- US-A- 4 667 565

## Beschreibung

Die Erfindung betrifft eine Drehringlafette für eine leichte Waffe an einem Kampffahrzeug, insbesondere an einer Luke eines Kampfpanzers, mit einem die Waffe tragenden Laufwagen, der an kreisringförmig gekrümmten Laufschienen über Führungsrollen geführt ist.

Derartige Drehringlafetten sind an sich bekannt. Die bekannten Drehringlafetten besitzen Laufschienen, die die Form eines geschlossenen Kreisrings haben, so daß der die Waffe tragende Laufwagen unbehindert um 360° und mehr herumgefahren werden kann und damit der volle Azimutbereich abgedeckt wird. Ist die Drehringlafette an einer üblichen mit einem aufklappbaren Deckel verschließbaren Luke angeordnet, so werden fehlende Stücke der Laufschienen im allgemeinen durch einsetzbare Segmente, die beispielsweise am Lukendeckel angebracht sind, ergänzt, so daß wiederum Laufschienen in Form eines vollen Kreisbogens zur Verfügung stehen.

Es sind Kampfpanzer bekannt (s. DE-OS 33 05 882) mit einer an der Oberseite der Fahrzeugwanne oder des Turmes angeordneten, mit einem Deckel verschließbaren Luke, bei denen der Lukendeckel aus zwei mindestens in der Schließstellung übereinander angeordneten Deckelteilen unterschiedlicher Masse aufgebaut ist, wobei der obere schwerere Deckelteil oberhalb des oberen Randes der Lukenöffnung angeordnet und parallel zur Schließebene der Luke verschiebbar ist, während der untere leichtere Deckelteil an der Unterseite des oberen Deckelteils angeordnet sein kann und senkrecht zur Schließebene der Luke bewegbar ist. Durch das Zusammenwirken der beiden Deckelteile wird ein dichtender Abschluß der Lukenöffnung erreicht.

Bei derartigen Lukendeckeln ist es in bestimmten Fällen außerordentlich schwierig, die Laufschiene in Form eines geschlossenen Kreisbogens auszubilden. Diese Schwierigkeit kann auch bei Klappluken auftreten, wenn sie mit starken Gewichtsausgleichern versehen sind.

Der Erfindung liegt die Aufgabe zugrunde, eine Drehringlafette der eingangs und im Oberbegriff des Patentanspruchs 1 angegebenen Bauart so auszubilden, daß eine sichere Führung des die Waffe tragenden Laufwagens erreicht ist, ohne daß irgendwelche Zusatzsegmente in die Laufschienen eingesetzt werden müssen, um die Form eines geschlossenen Kreisbogens zu erreichen.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den Unteransprüchen beschrieben.

Der Grundgedanke der Erfindung besteht darin, die Laufschienen nur in Form von Teilkreisbögen auszubilden mit einer mehr oder weniger großen Lücke in Umfangsrichtung und dafür den Laufwagen in Form eines Teilkreisrings auszubilden, der sich über eine solche Bogenlänge erstreckt, daß er nicht nur die Lücke in den Teilkreisbögen der Laufschienen überbrückt, sondern daß er beim Überfahren dieser Lücken auch dann, wenn sich sein eines Ende über der Lücke befindet und somit nicht abgestützt ist, am anderen Ende sicher abgestützt und geführt ist.

Es hat sich gezeigt, daß es für die sichere Führung und Abstützung besonders vorteilhaft ist, wenn sich der Laufwagen über eine Bogenlänge erstreckt, die im wesentlichen der Bogenlänge der Laufschienen entspricht. Damit ist sichergestellt, daß eine genügend große Stützlänge für die auf dem Laufwagen angeordnete Waffe vorhanden ist.

Wie weiter unten anhand eines Ausführungsbeispiels gezeigt wird, ist die erfindungsgemäße Ausbildung der Drehringlafette, insbesondere bei Kampfpanzern mit Schiebeluken, besonders vorteilhaft. Die Anordnung ist in diesem Falle so, daß die Bewegungsbahn der Schiebeluke genau durch die Lücke in den Teilkreisbögen der Laufschienen verläuft. Es ist dann in der Ruhestellung des Laufwagens, in der Laufwagen und Laufschienen genau den gleichen Bogenabschnitt überdecken, ohne weiteres möglich, die Luke zwischen den offenen Enden des Laufwagens und der Laufschienen hindurch in Öffnungsrichtung zu verschieben.

Im folgenden wird anhand der beigefügten Zeichnungen ein Ausführungsbeispiel für die erfindungsgemäße Drehringlafette näher erläutert.

In den Zeichnungen zeigen:
- Fig. 1: in einer schematischen perspektivischen Seitenansicht einen Kampfpanzerturm mit einer durch einen verschiebbaren Lukendeckel verschließbaren Luke, an der eine Drehringlafette angeordnet ist;
- Fig. 2: eine stark schematisierte gegenüber Fig. 1 vergrößerte Teilaufsicht auf den Kampfpanzer im Bereich der Luke bei geschlossenem und verriegeltem Lukendeckel;
- Fig. 3: in einer Darstellung analog Fig. 2 die Luke bei geöffnetem verriegeltem Lukendeckel mit Laufwagen in Ruhestellung;
- Fig. 4: in einer Darstellung analog Fig. 2 die geöffnete Luke nach einer ersten Verdrehung des Laufwagens;
- Fig. 5: in einer Darstellung analog Fig. 2 die geöffnete Luke mit einer zweiten Verdrehung des Laufwagens;
- Fig. 6: in nochmals vergrößerter Darstellung einen vertikalen Teilschnitt durch Laufwagen und Laufschiene nach der Linie VI-VI in Fig. 5;
- Fig. 7: in einer Darstellung analog Fig. 6 eine Variante der Ausführung des Laufwagens und der Laufschiene.

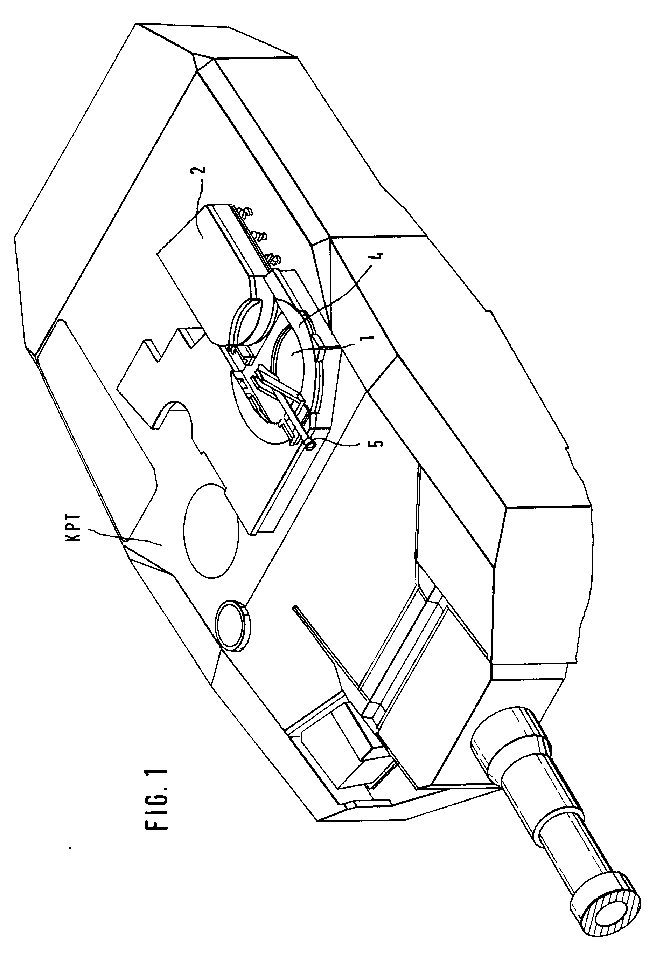

Fig. 1 zeigt einen Kampfpanzerturm KPT mit einer Ein-Ausstiegsluke 1, die mittels eines in Längsrichtung des Turms verschiebbaren Lukendeckels 2 verschließbar ist. An der Luke ist eine Drehringlafette 4 angeordnet, die eine leichte Waffe 5 trägt.

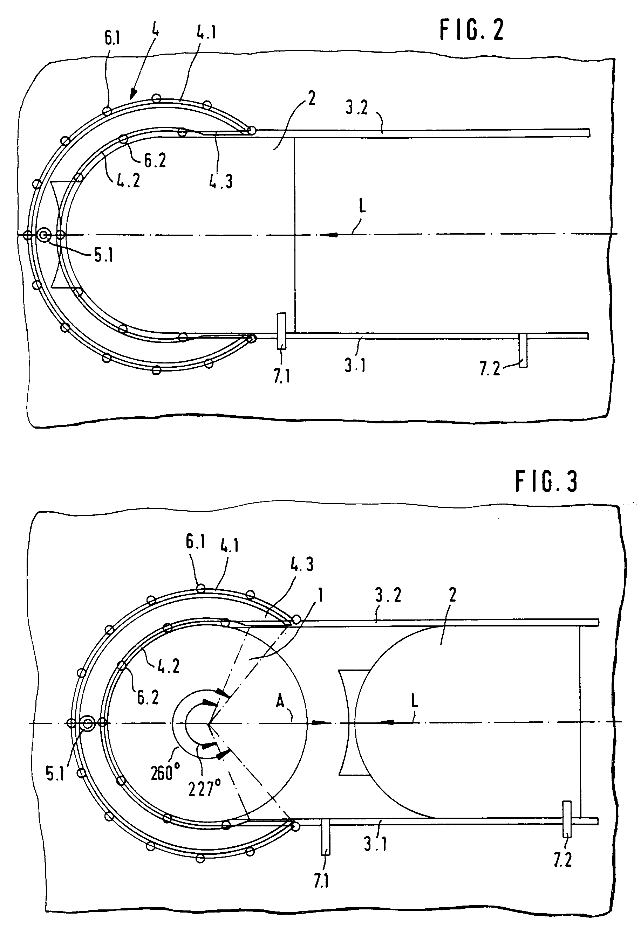

Die genauere Anordnung und Ausbildung der Drehringlafette und ihre Lage in Bezug auf den Lukendeckel sind den Fig. 2 bis 6 zu entnehmen.

In den Fig. 2 bis 5 sind Drehringlafette und Lukendeckel stark schematisiert angedeutet, um die verschiedenen Positionen dieser Bauteile klarer darstellen zu können. Fig. 2 zeigt die Luke im geschlossenen Zustand, wobei der Lukendeckel durch eine erste Verriegelungseinrichtung 7.1 in der geschlossenen Stellung verriegelt ist. Der Lukendeckel 2 ist über nicht dargestellte Führungsrollen in Führungsschienen 3.1 und 3.2 geführt. Um einen Teil des Umfangs der Luke 1 herum erstrecken sich Laufschienen 4.1, 4.2, an denen über Führungsrollen 6 ein Laufwagen 4.3 geführt ist, der die nur durch ihre Befestigungsvorrichtung 5.1 angedeutete Waffe 5 trägt.

Die Laufschienen 4.1 und 4.2 besitzen jeweils die Form eines Teilkreisbogens, wobei im dargestellten Ausführungsbeispiel die äußere Laufschiene 4.1 sich über eine Bogenlänge von 1,44π im Winkelmaß 260° und die innere Laufschiene 4.2 über eine Bogenlänge von 1,26π im Winkelmaß 227° erstreckt (s.Fig. 3). Der Laufwagen 4.3 besitzt die Form eines Teilkreisrings mit einer Bogenlänge, die an äußeren Rand in etwa der Bogenlänge der äußeren Laufschiene 4.1 und am inneren Rand in etwa der Bogenlänge der inneren Laufschiene 4.2 entspricht. Wie aus den Fig. 2 und 3 zu entnehmen, stehen in der Ruhestellung des Laufwagens 4.3 mit nach vorne in Pfeilrichtung L gerichteter Waffe 5 Laufwagen 4.3 und Laufschienen 4.1 bzw. 4.2 deckungsgleich übereinander. Dadurch entsteht ein nach hinten gerichteter freier Bereich, durch den die Führungsschienen 3.1 und 3.2 für den Lukendeckel 2 in das Innere der Laufschienen 4.1 und 4.2 hineingeführt sind und durch den der Lukendeckel 2 entgegen der Pfeilrichtung L nach hinten in die Öffnungsstellung verschiebbar ist. Dies wird im folgenden anhand der Fig. 2 und 3 erläutert.

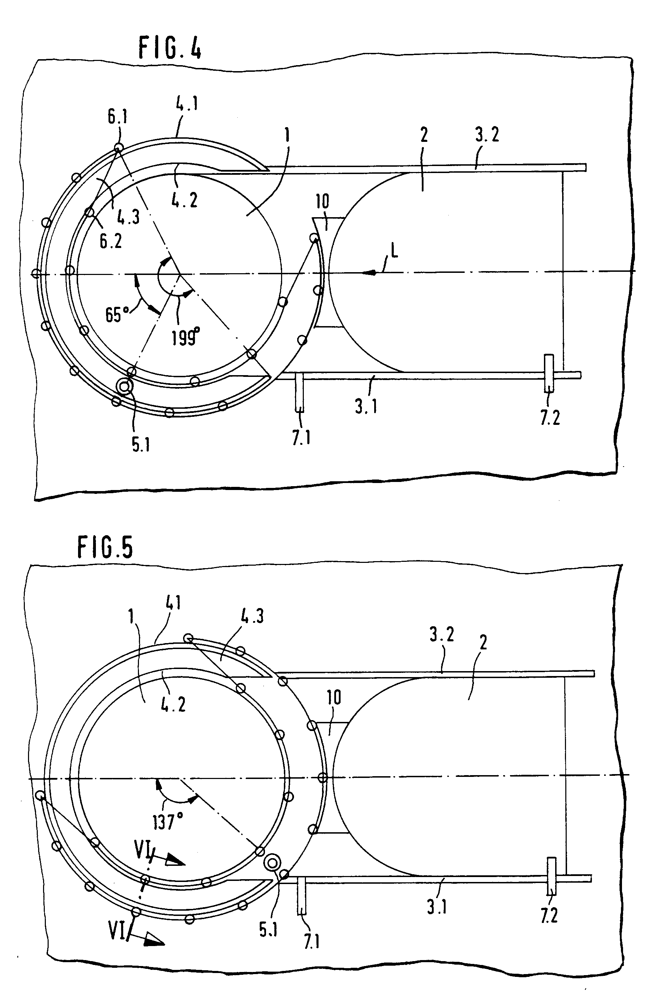

Zunächst wird die Verriegelung 7.1 des Lukendeckels 2 gelöst. Dann wird der Lukendeckel in Pfeilrichtung A in die Offenstellung verschoben und schließlich durch die zweite Verriegelungsvorrichtung 7.2 in der Offenstellung verriegelt. Nunmehr ist der offene Bereich zwischen den Enden der Laufschienen 4.1 und 4.2 frei, so daß eine Verdrehung des Laufwagens 4.3 möglich ist. In Fig. 4 ist eine erste Verdrehung aus der Ruhestellung um einen Winkel von etwa 65° Azimut dargestellt. In dieser Stellung ist der Laufwagen 4.3 noch auf ca. Dreivierteln seiner Bogenlänge auf den Laufschienen abgestützt. Das restliche Viertel ragt in den offenen Teil zwischen den Enden der Laufschienen 4.1 und 4.2.

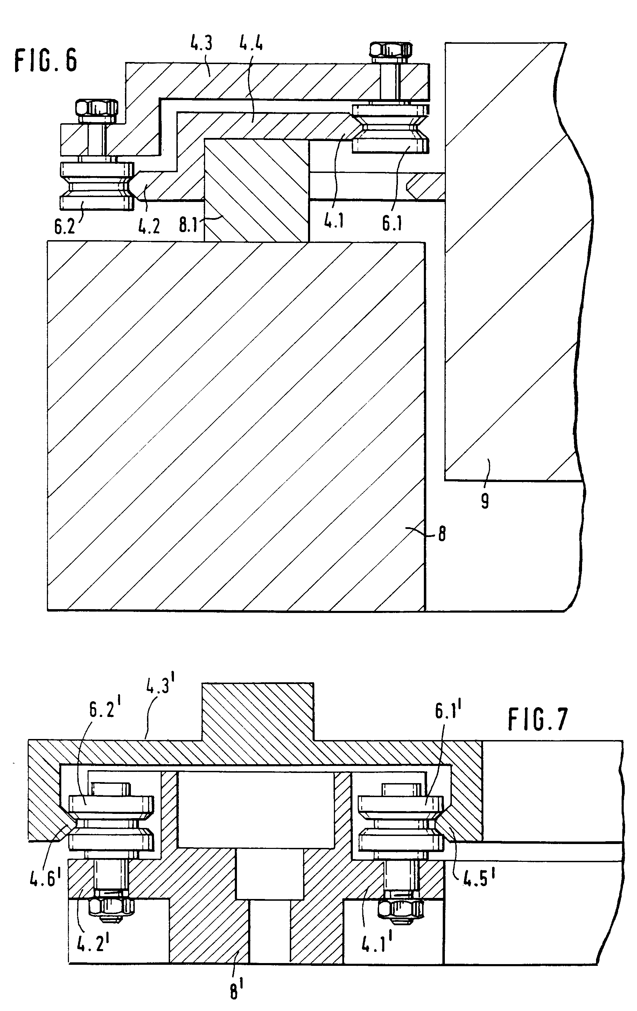

Wird der Laufwagen 4.3 weiter in die in Fig. 5 dargestellte Position verdreht, also um einen Winkel von etwa 137° in Azimut aus der Ruhelage, so erkennt man, daß er zwar an seiner einen Seite nur noch auf etwa der Hälfte seiner Bogenlänge abgestützt ist, dafür aber das andere Ende die Lücke bereits überquert hat und sich wieder auf den Laufschienen abstützt. Es ist somit insgesamt eine gute Führung und Abstützung erreicht.

Wird der Laufring 4.3 noch weiter verdreht, so nimmt der abgestützte Bereich an dem in Fig. 5 unteren Ende ab, dafür nimmt aber der abgestützte Bereich an dem in Fig. 5 oberen Ende des Laufrings zu. Es bleibt also bei einer Abstützlänge, die auch im ungünstigsten Falle immer noch mehr als der Hälfte der Gesamtlänge des Laufwagens entspricht. Dies entspricht dem gewählten Bogenlängenabschnitt von Laufschienen und Laufwagen, gemäß der die Bogenlänge der Lücke zwischen den Enden der äußeren Laufschienen 4.1 gleich 0,56π oder im Winkelmaß ca. 100° beträgt, so daß im ungünstigsten Falle der Laufwagen am Außenrand immer über einen Gesamtwinkelbereich von 160° abgestützt ist.

An der Vorderseite des Lukendeckels 2 ist eine zusätzliche Führung 10 angeordnet, die im geöffneten Zustand des Lukendeckels bei der Verdrehung des Laufwagens 4.3 die seitliche Führung der Enden des Laufwagens unterstützt.

In Fig. 6 ist die Führung des Laufwagens an den Laufschienen näher dargestellt. Die Laufschienen 4.2 und 4.1 sind an den Enden eines Stufenrings 4.4 angeordnet und befinden sich somit in verschiedenen Höhenlagen. Der Stufenring 4.4 ist über einen Verbindungsring 8.1 auf einem Lagerring 8 gelagert, der auf der Dachplatte des Kampfpanzerturms angeordnet ist. An der Außenseite des Lagerrings 8 befindet sich noch ein Vorsatzring 9, der den Stufenring 4.4 sowie den darüber angeordneten Laufwagen 4.3 nach außen abdeckt. An der Außenseite des Laufwagens 4.3 sind Führungsrollen 6.1 angeordnet, deren Drehachsen senkrecht zur Drehringebene stehen, während an der Innenseite des Laufwagens 4.3 Führungsrollen 6.2 angeordnet sind, deren Drehachsen ebenfalls senkrecht zur Drehringebene stehen. Die Führungsrollen 6.1 und 6.2 weisen an ihren Laufflächen konisch ausgebildete Nuten bzw. Führungsrillen auf, in welche die entsprechend ausgebildeten Enden der Laufschienen 4.1 und 4.2 eingreifen. Auf diese Weise wird erreicht, daß vertikale Belastungen gut aufgenommen werden und gleichzeitig eine harmonische kreisförmige Bewegung erzielt wird.

In dem in Fig. 2 bis 6 dargestellten Ausführungsbeispiel befinden sich die Führungsrollen am Laufwagen. Selbstverständlich ist auch eine Umkehrung der Anordnung möglich, bei welcher die Führungsrollen an den Laufschienen angeordnet sind und sich am Laufwagen Gegenschienen befinden, welche in die Führungsrollen eingreifen.

Diese Variante des Ausführungsbeispiels ist in Fig. 7 dargestellt.

Die Laufschienen 4.1' und 4.2' sind an einem Verbindungsring 8' angeordnet, der in nicht dargestellter Weise auf der Dachplatte des Kampfpanzerturms angeordnet ist. An den Laufschienen 4.1' und 4.2' sind die Führungsrollen 6.1' bzw. 6.2' angeordnet, während am Laufwagen 4.3' Gegenschienen 4.5' und 4.6' angeordnet sind, welche in die Führungsrollen 6.1' und 6.2' eingreifen. Im übrigen entspricht Ausbildung und Funktionsweise des Ausführungsbeispiels dem anhand der Fig. 2 bis 6 dargestellten Ausführungsbeispiel.

## Patentansprüche

1. Drehringlafette für eine leichte Waffe an einem Kampffahrzeug, insbesondere an einer Luke eines Kampfpanzers, mit einem die Waffe tragenden Laufwagen, der an kreisringförmig gekrümmten Laufschienen über Führungsrollen geführt ist, dadurch gekennzeichnet, daß die Laufschienen (4.1, 4.2) die Form eines Teilkreisbogens besitzen mit einer vorgegebenen Bogenlänge, die größer als π und kleiner als 2π ist und der Laufwagen (4.3) die Form eines Teilkreisrings besitzt, dessen Bogenlänge größer ist als die Differenz zwischen der Bogenlänge 2π des Vollkreises und der Bogenlänge der Laufschienen.

2. Drehringlafette nach Anspruch 1, dadurch gekennzeichnet, daß die Bogenlänge des Teilkreisrings für den Laufwagen (4.3) im wesentlichen der Bogenlänge der Teilkreislängen für die Laufschienen (4.1, 4.2) entspricht.

3. Drehringlafette nach Anspruch 2, dadurch gekennzeichnet, daß die Bogenlänge des Teilkreisrings für den Laufwagen (4.3) und die Bogenlängen für die Teilkreisbögen der Laufschienen (4.1, 4.2) im wesentlichen 5/4π bis 3/2π betragen.

4. Drehringlafette nach einem der Ansprüche 1 bis 3, dadurch gekennzeichnet, daß der Laufwagen (4.3) an der Innenseite und Außenseite am Umfang Führungsrollen (6.1, 6.2) aufweist, deren Drehachsen senkrecht zur Drehringebene stehen, wobei jede Führungsrolle (6.1, 6.2) in ihrer Lauffläche eine konische Führungsnut aufweist, in welche die entsprechenden Laufschienen in einer Richtung parallel zur Drehringebene eingreifen.

5. Drehringlafette nach einem der Ansprüche 1 bis 4, dadurch gekennzeichnet, daß sie an einer Ein-Ausstiegsluke (1) eines Kampfpanzers angeordnet ist, die mit einem Lukendeckel (2) verschließbar ist, der einen oberhalb des oberen Randes der Lukenöffnung angeordneten Deckelteil aufweist, welcher parallel zur Schließebene der Luke verschiebbar ist, wobei die Laufschienen (4.1, 4.2) der Drehringlafette symmetrisch zur Bewegungsrichtung (A) des Deckelteils (2) angeordnet sind und die Bewegungsbahn des Deckelteils (2) durch den offenen Teil der Teilkreisbögen geführt ist.

## Claims

1. Rotating ring mount for a light weapon on a combat vehicle, especially on a hatch of a tank, with a carriage which bears the weapon and is guided via guide rollers on running rails curved in the shape of a circular ring, characterised in that the running rails (4.1, 4.2) are in the shape of a partial circular arc with a predetermined arc length which is greater than π and smaller than 2π, and the carriage (4.3) is in the shape of a partial circular ring, the arc length of which is greater than the difference between the arc length 2π of the complete circle and the arc length of the running rails.

2. Rotating ring mount according to claim 1, characterised in that the arc length of the partial circular ring for the carriage (4.3) corresponds essentially to the arc length of the partial circular lengths for the running rails (4.1, 4.2).

3. Rotating ring mount according to claim 2, characterised in that the arc length of the partial circular ring for the carriage (4.3) and the arc lengths for the partial circular arcs of the running rails (4.1, 4.2) essentially amount to 5/4π to 3/2π.

4. Rotating ring mount according to one of claims 1 to 3, characterised in that the carriage (4.3) comprises guide rollers (6.1, 6.2) on the inside and outside at the circumference, the rotational axes of which rollers are perpendicular to the plane of the rotating ring, each guide roller (6.1, 6.2) comprising in its running surface a conical guide groove in which the corresponding running rails engage in a direction parallel to the plane of the rotating ring.

5. Rotating ring mount according to one of claims 1 to 4, characterised in that it is disposed on an entrance-exit hatch (1) of a tank, which hatch can be closed by a hatch cover (2) comprising a cover part which is disposed above the upper edge of the hatch opening and which can be displaced parallel to the closing plane of the hatch, the running rails (4.1, 4.2) of the rotating ring mount being disposed symmetrically with respect to the direction of movement (A) of the cover part (2), and the path of movement of the cover part (2) being guided by the open part of the partial circular arcs.

## Revendications

1. Affût à bague rotative pour une arme légère montée sur un véhicule de combat, en particulier sur une écoutille d'un char blindé, comportant un chariot supportant l'arme, lequel est guidé par des rouleaux de guidage se déplaçant sur des rails recourbés en forme de cercle, caractérisé en ce que les rails (4.1, 4.2) présentent la forme d'un arc de cercle gradué à radian prédéterminé supérieur à π et inférieur à 2 π, et en ce que le chariot (4.3) présente la forme d'un cercle gradué dont le radian est supérieur à la différence entre le radian 2 π du cercle complet et le radian des rails.

2. Affût à bague rotative selon la revendication 1, caractérisé en ce que le radian du cercle gradué du chariot (4.3) correspont sensiblement à celui des longueurs du cercle gradué des rails (4.1, 4.2).

3. Affût à bague rotative selon la revendication 2, caractérisé en ce que le radian du cercle du chariot (4.3) est gradué et les radians des arcs de cercle des rails (4.1, 4.2) sont compris sensiblement entre 5/4 π et 3/2 π.

4. Affût à bague rotative selon l'une des revendications 1 à 3, caractérisé en ce que le chariot (4.3) présente sur son côté intérieur et son côté extérieur des rouleaux de guidage (6.1, 6.2) placés sur le pourtour, dont les axes de rotation sont perpendiculaires au plan de la bague rotative, chaque rouleau de guidage (6.1, 6.2) présentant, sur sa surface de roulement, une rainure conique de guidage dans laquelle pénètrent les rails correspondants dans une direction parallèle au plan de la bague rotative.

5. Affût à bague rotative selon l'une des revendications 1 à 4, caractérisé en ce qu'il est disposé sur une écoutille d'entrée et de sortie (1) d'un char blindé, laquelle est obturable par un panneau (2) qui présente une partie de panneau disposée au-dessus du bord supérieur de l'ouverture de l'écoutille, cette partie pouvant coulisser parallèlement au plan de fermeture de l'écoutille, les rails (4.1, 4.2) de l'affût étant disposés symétriquement par rapport à la direction de déplacement (A) de la partie (2) du panneau et le trajet de déplacement de cette partie (2) du panneau passant à travers la partie ouverte des arcs de cercle gradués.
